Europäisches Patentamt

European Patent Office

Office européen des brevets

(19)

(11) **EP 1 587 328 A2**

(12) **EUROPEAN PATENT APPLICATION**

(43) Date of publication:
**19.10.2005 Bulletin 2005/42**

(51) Int Cl.⁷: **H04N 7/26**

(21) Application number: **05251898.2**

(22) Date of filing: **29.03.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **07.05.2004 KR 2004032242
13.04.2004 US 561514 P**

(71) Applicant: **SAMSUNG ELECTRONICS CO., LTD.
Suwon-si, Gyeonggi-do (KR)**

(72) Inventors:
• **Ha, Ho-jin
  Seoul (KR)**
• **Han, Woo-jin
  Yeongtong-gu Suwon-si Gyeonggi-do (KR)**

(74) Representative: **Davies, Robert Ean et al
Appleyard Lees,
15 Clare Road
Halifax HX1 2HY (GB)**

(54) **Method for motion estimation of video frame and video encoder using the method**

(57)     Provided are a method for motion estimation of a video frame and a video encoder using the method. The method includes providing a low-resolution frame by down-sampling a video frame to be motion estimated, estimating motion vectors for blocks of the low-resolution frame, and creating initial values used to estimate motion vectors for blocks of a high resolution frame by up-sampling the blocks of the low-resolution frame.

## FIG. 1

## Description

The present invention relates to a method for motion estimation of a video frame and a video encoder using the method.

In general, moving images have both spatial and temporal correlations.
Video coding is a process of removing spatial and temporal redundancies from the moving images having both spatial and temporal correlations. In video coding, spatial redundancy is removed through spatial transformation and temporal redundancy is removed through motion estimation and motion compensation.

Discrete cosine transformation (DCT) and wavelet transformation are well known as representative algorithms for spatial transformation. DCT involves decomposing an image frame into frequency components. Zero-frequency or low-frequency components serve as more important information than high-frequency components. DCT is currently adopted as one of the MPEG-2 video coding algorithms. Wavelet transformation involves decomposing an image frame into a plurality of subbands having different frequency bands and resolutions. In other words, the image frame is decomposed into a low-frequency subband (L subband) in which the original image is reduced to 1/4 of its original size, and high-frequency subbands (H subbands). The decomposed L subband is further decomposed into a low-frequency subband (LL subband), in which the size-reduced image is further reduced to 1/4 of its size, and high-frequency subbands (LH subbands). The L subband or LL subband has a small size, but contains most of the energy from the entire image frame.

In a moving image, temporal redundancy is usually larger than spatial redundancy. Temporal redundancy can be removed through interframe coding. Interframe coding includes a motion estimation process of estimating motion between consecutive frames, a motion compensation process of compensating for motion using estimated motion information, and a process of obtaining a residual frame between a motion-compensated frame and a current frame. A block matching algorithm (BMA) is usually used as a motion estimation method in video coding. The BMA is simple and can thus be easily implemented in hardware, but it is difficult to determine an appropriate search area and block size while searching motion vectors. Further, motion estimation in the BMA is performed in block units of a predetermined size, thus resulting in a blocking effect. Also, when a full search is done using the BMA, a huge amount of computing power is required. Indeed, motion estimation is the most computationally intensive portion of video coding in that it requires 70 - 80% of the entire computing power. In an attempt to address such disadvantages, various methods have been devised. A hierarchical motion vector search method is one of those methods.

The hierarchical motion vector search method is an algorithm that creates a current frame and a reference frame having multi-resolution pyramidal structures and refines a motion vector estimated at the lowest resolution, and thereby repeatedly estimates motion vectors for subsequent higher resolutions. The hierarchical motion vector search method requires less search time than the BMA and creates a smooth motion vector field through global motion estimation at low resolutions and local motion estimation at high resolutions.

Conventional hierarchical motion vector search methods use a motion vector estimated in a base band or a top layer having the lowest resolution as an initial value for motion vector searching in a lower layer. Thus, a motion vector obtained by multiplying a motion vector estimated in an upper layer (or low resolution) by 2, or a motion vector estimated in the same layer, is used as the initial value. The initial value in the hierarchical motion vector search methods is closely related to the amount of computation required for motion vector searching. Therefore, a method is needed for more efficient motion estimation using motion vectors estimated at different resolutions or the same resolution.

Embodiments of the present invention provide a method for efficient motion estimation using a motion vector estimated for a lower resolution or the same resolution.

Embodiments of the present invention also provide a video encoder using the method for efficient motion estimation.

According to an aspect of the present invention, there is provided a method for motion estimation of a video frame, the method comprising: providing a low-resolution frame by down-sampling a video frame that is to be motion estimated; estimating motion vectors for blocks of the low-resolution frame; and creating initial values used to estimate motion vectors for blocks of a high resolution frame by up-sampling the blocks of the low-resolution frame.

According to another aspect of the present invention, there is provided a recording medium having a computer readable program recorded therein, the program for executing a method for motion estimation of a video frame, the method comprising: providing a low-resolution frame by down-sampling a video frame that is to be motion estimated; estimating motion vectors for blocks of the low-resolution frame; and creating initial values used to estimate motion vectors for blocks of a high resolution frame by up-sampling the blocks of the low-resolution frame.

According to a further aspect of the present invention, there is provided a video encoder comprising: a motion estimation module operable to: provide a low-resolution frame by down-sampling a video frame to be motion estimated; estimate motion vectors for blocks of the low-resolution frame; create initial values used to estimate motion vectors for blocks of a high resolution frame by up-sampling the blocks of the low-resolution frame; perform motion estimation for the high resolution frame using the initial values and a comparison module operable to create a residual frame with respect to the video frame by comparing the video frame with a reconstructed reference frame using the motion vectors estimated by the motion estimation module.

For a better understanding of the invention, and to show how embodiments of the same may be carried into effect, reference will now be made, by way of example, to the accompanying diagrammatic drawings in which:

FIG. 1 is a flowchart of a hierarchical motion vector search process;

FIG. 2 illustrates a conventional variable-size block motion vector search process;

FIG. 3 illustrates a variable-size block motion vector search process according to an exemplary embodiment of the present invention;

FIG. 4 illustrates up-sampling and down-sampling processes according to an exemplary embodiment of the present invention;

FIG. 5 is a block diagram of a video encoder according to an exemplary embodiment of the present invention; and

FIG. 6 is a block diagram of a motion estimation module according to an exemplary embodiment of the present invention.

Exemplary embodiments of the present invention will now be described in detail with reference to the accompanying drawings.

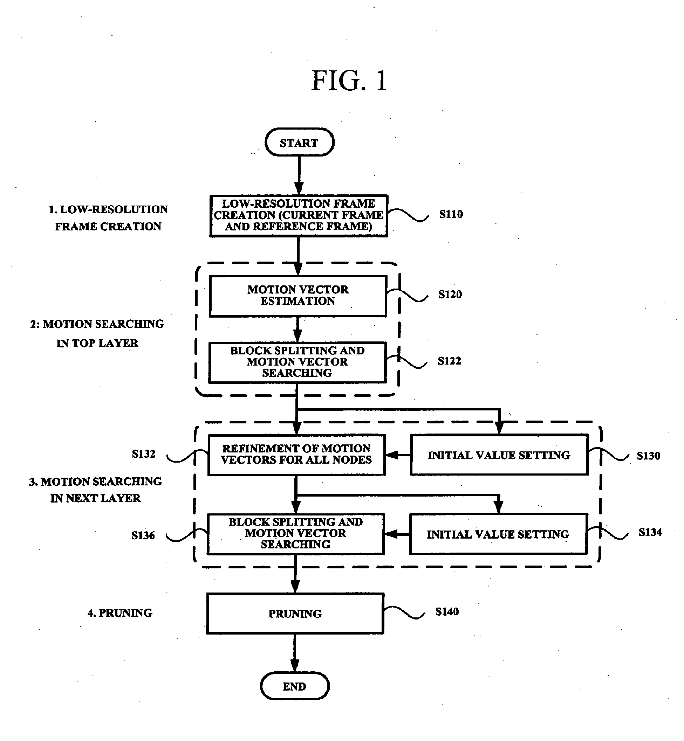

FIG. 1 is a flowchart of a hierarchical motion vector search process.

First, a low-resolution frame having a pyramidal structure is created for both a current frame and a reference frame in operation S 110. The low-resolution frame contains the original frame having the highest resolution in a bottom layer and a lower resolution frame obtained by low-pass filtering (or down-sampling) the original frame in an upper layer. The low-resolution frame may be composed of two layers including the original frame and the lower resolution frame or may be composed of at least three layers.

Once the low-resolution frame is created, a motion vector is first searched at the lowest resolution (a top layer). More specifically, a motion vector is searched in the top layer in block units of a predetermined size, e.g., $8 \times 8$ in operation S120. Each block is split into four $4 \times 4$ child blocks and a motion vector for each child block is searched in operation S122. After completion of motion vector searching in the top layer, a motion vector is searched in the next layer. First, initial values are set based on motion vectors estimated in previous layers in operation S130. Conventional initial value setting is performed by doubling the motion vectors estimated in the previous layers, and initial value setting according to an embodiment of the present invention will be described later. After completion of initial value setting, a motion vector for each node is refined using the set initial values in operation S132. Refinement means searching for a motion vector, which has been estimated for a low resolution, for a high resolution. A node refers to a block in a current layer corresponding to a child block in a previous layer. In one example, the node is an $8 \times 8$ block in the current layer corresponding to a $4 \times 4$ block in the top layer. After completion of refinement of a motion vector for each node, each $8 \times 8$ node is further split into child blocks and a motion vector for each child block is searched in operation S136. Initial value setting (operation S134) is first performed for motion vector searching for child blocks, in which motion vectors for nodes obtained through motion vector refinement are used as initial values.

After motion vector refinement in the current layer and motion vector searching for child blocks are completed, if there is a lower layer having a resolution that is higher than that of the current layer, a motion vector is then searched in the lower layer having the higher resolution. In other words, initial values for nodes in the lower layer corresponding to child blocks in the current layer are set and the motion vectors for the nodes are refined. The nodes are then split into child blocks again and motion vectors for the child blocks are searched using the refined motion vectors as initial values.

After completion of motion vector searching at every layer, pruning is performed in operation S 140. This pruning process reduces the amount of bits assigned to a motion vector by merging split blocks.

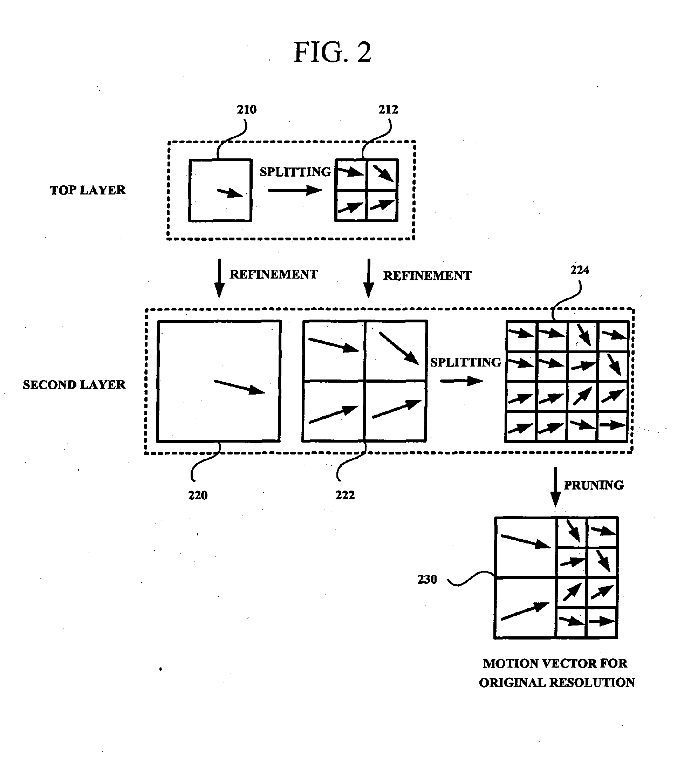

FIG. 2 illustrates a conventional variable-size block motion vector search process. For convenience of explanation, it is assumed that motion estimation is performed in two layers. A second layer has the original resolution, and a top layer has the lowest resolution and is obtained by down-sampling the second layer.

First, motion is estimated for a block 210 of a frame in the top layer. Motion estimation is a process of obtaining motion between a block of a current frame and a corresponding block of a reference frame. In other words, while changing the location of a block of a reference frame corresponding to a block of a current frame and coding a difference between the two blocks, a location having the minimum cost value is searched. After the motion vector for the block 210 is obtained, the block 210 is split into 4 blocks 212 and motion of each of the 4 blocks 212 is searched.

After completion of motion vector searching in the top layer, motion vector searching is performed in the second layer. First, a block 220 refines motion using a motion vector obtained by multiplying the motion vector for the block 210 by 2 as its initial value. Also, blocks 222 refine motion using motion vectors obtained by multiplying the motion vectors for the blocks 212 as their initial values. After completion of motion refinement, each of the blocks 222 is split into 4 blocks 224 and motion of each of the 4 blocks 224 is searched. At this time, a refined motion vector for each of the blocks 222 before the split is used as an initial value for motion vector searching for each of the blocks 224.

After motion vectors for the blocks 222, obtained by splitting the blocks 220, and the blocks 224, obtained by splitting the blocks 222, are obtained, variable-size blocks 230 to be used for inter-coding are determined through the pruning process.

In brief, hierarchical motion vector searching involves creating a current frame and a reference frame having multi-resolutions, repeatedly estimating motion vectors for subsequent higher resolutions using the motion vector estimated at the lowest resolution, and creating a motion vector for the highest resolution while further splitting a current block into several child blocks. The core parts of such hierarchical motion vector searching are refinement and splitting. As shown in FIG. 2, in conventional hierarchical motion vector searching, when an initial value used for refinement or splitting is set, it is usually obtained by doubling the motion vector in the upper layer or the same layer. As a result, motion vector searching may not be efficiently performed, and therefore bits can be lost during motion vector coding.

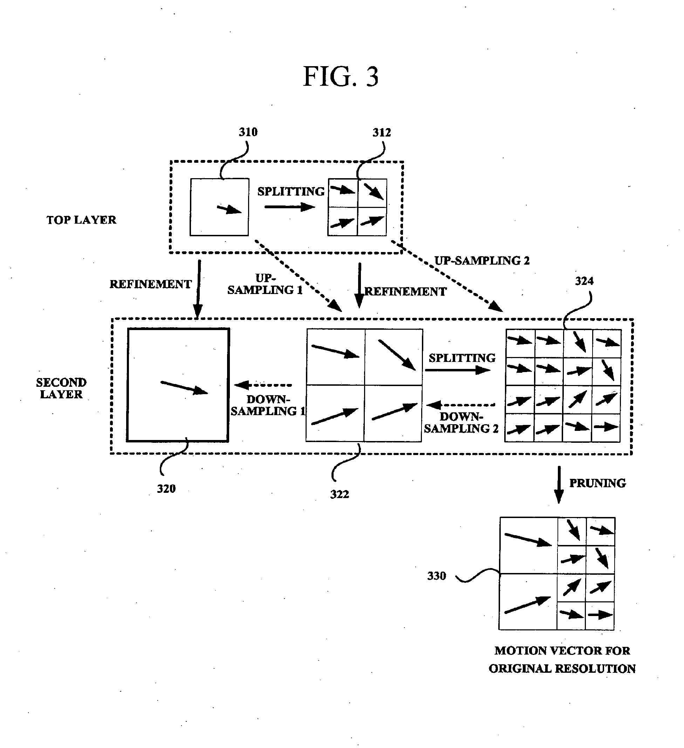

FIG. 3 illustrates a variable-size block motion vector search process according to an exemplary embodiment of the present invention. For convenience of explanation, it is assumed that motion estimation is performed in two layers.

A second layer has the original resolution, i.e., the highest resolution, and a top layer has the lowest resolution and is obtained by down-sampling the second layer.

First, motion is estimated for a block 310 of a frame in the top layer. Motion estimation is the process of obtaining motion between a block of a current frame and a corresponding block of a reference frame. In other words, while changing the location of a block of a reference frame corresponding to a block of a current frame and coding a difference between the two blocks, a location having the minimum cost value is searched. After the motion vector for the block 310 is obtained, the block 310 is split into four blocks 312 and motion is searched for each of the blocks 312.

After completion of motion vector searching in the top layer, motion vector searching is performed in the second layer. An initial value used for motion vector searching in the second layer is obtained by up-sampling and down-sampling processes. Initial values for blocks 324 can be obtained by up-sampling the blocks 312 (up-sampling 2). Initial values for blocks 322 may be obtained by down-sampling the blocks 324 (down-sampling 2) or up-sampling the block 310 (up-sampling 1). An initial value for the block 320 can be obtained by down-sampling the blocks 322 (down-sampling 1). The initial values for the blocks 322 can be obtained selectively by up-sampling 2 and then down-sampling 2 or by up-sampling 1. Selection criteria of down-sampling or up-sampling may be determined according to the complexity of an image texture. Up-sampling and down-sampling will be described in more detail later.

After refinement or estimation of motion vectors for the blocks 320, 322, and 324 for which initial values are set, motion vectors for variable-size blocks 330 in a frame having the original resolution are determined through the pruning process. The purpose of the pruning process is to merge motion vectors (or blocks), and thus coding is performed in units of a large block in case a large block unit is more useful for coding than a small block unit.

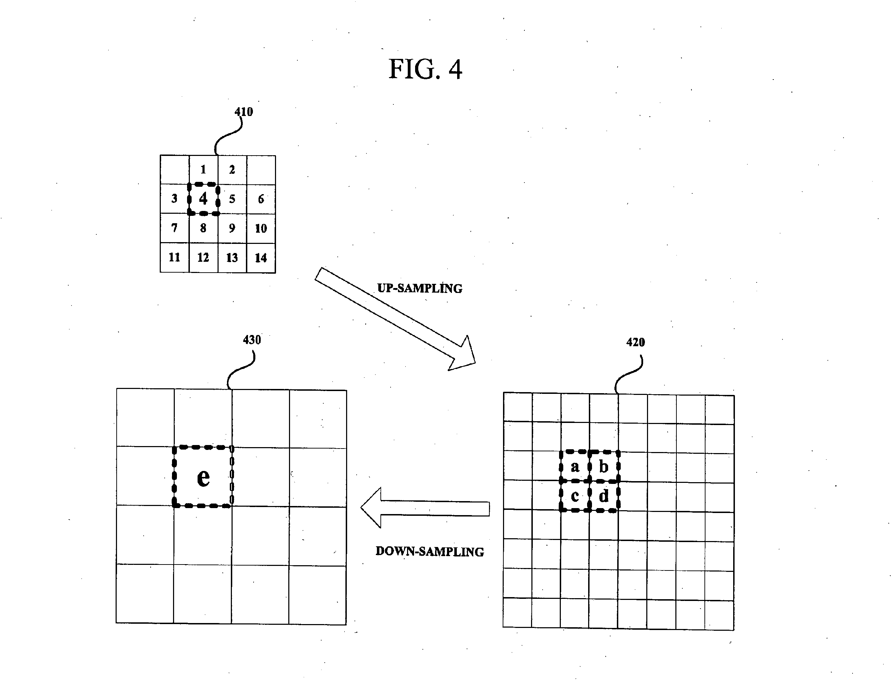

FIG. 4 illustrates up-sampling and down-sampling processes according to an exemplary embodiment of the present invention. The up-sampling and down-sampling processes can be performed using well-known filters. For example, a median filter, a bi-cubic filter, a bi-linear filter, or a quadratic filter can be used.

By up-sampling a frame 410 in a top layer having a low resolution, a frame 420 in a lower layer having a high resolution can be obtained. Initial values for motion vector searching for 4 blocks in a lower layer can be set for a block in its upper layer. After the initial values are set, motion vectors in the lower layer are determined through motion searching. The use of a median filter will be taken as an example. When blocks a, b, c, and d of the frame 420 are created by up-sampling a block 4 of the frame 410, a motion vector (an initial value) for each of the blocks a, b, c, and d can be determined as follows.

Equation (1)

$$MVa = 2 * median(MV1, MV3, MV4)$$

$$MVb = 2 * median(MV1, MV4, MV5)$$

$$MVc = 2 * median(MV3, MV4, MV8)$$

$$MVd = 2 * median(MV4, MV5, MV8)$$

where MVa, MVb, MVc, and MVd represent motion vectors for child blocks a, b, c, and d, respectively, MV1, MV3, MV4, MV5, and MV8 represent motion vectors for blocks 1, 3, 4, 5, and 8, respectively, and *median* indicates a median function that outputs a median value among input vectors. A factor 2 multiplied to the median function is obtained by scaling a motion vector since a resolution is increased by up-sampling. Equation 1 is an example of obtaining a motion vector for each of the up-sampled child blocks. However, obtaining the motion vector using neighboring vectors, other filters instead of a median filter, or different numbers of input vector values should also be construed as being included in the technical scope of embodiments of the present invention.

When motion of a block e of the frame 430 in the lower layer is refined using a block of the frame 410 in the top layer having the lowest resolution, a motion vector obtained by down-sampling the 4 blocks a, b, c, and d in the lower layer that are obtained by up-sampling the block 4 of the frame 410 is set to an initial value for motion refining. A median filter may be used for down-sampling. However, since four motion vectors are input and one value should be output, a motion vector value that is closer to the average value of two motion vectors of the median value is selected for median filtering. Also, an average of motion vectors can be taken using down-sampling. If a block takes the form of a rectangle instead of a square, one motion vector may be obtained by down-sampling 2, 6, or 8 blocks instead of 4 blocks.

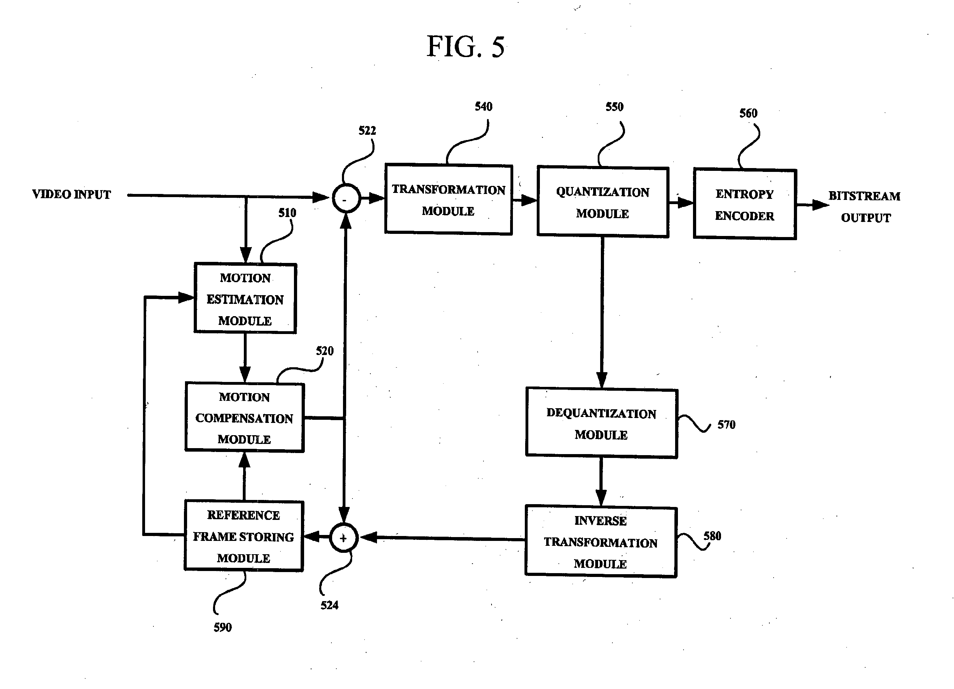

FIG. 5 is a block diagram of a video encoder according to an exemplary embodiment of the present invention.

The video encoder shown in FIG. 5 is a closed loop type video encoder. Closed loop type video encoders refer to a frame that is reconstructed by decoding an already-coded frame, instead of the original video frame that is input during interframe coding. On the other hand, open loop type video encoders refer to the original video frame that is input during interframe coding. The closed loop type video encoders exhibit performance that is superior to the open loop type video encoders, but some video coding algorithms, e.g., motion compensation temporal filtering, can only use the open loop type video encoders. In this embodiment, the closed loop type video encoders are mainly described, but such descriptions are only an example.

Once a video signal is input to the closed loop type video encoder, it is determined whether to perform intraframe coding or interframe coding. An intraframe is coded without reference to other frames, and an interframe is coded with reference to other frames.

An intraframe is coded through a transformation module 540, a quantization module 550, and an entropy encoder 560, without being processed by a motion estimation module 510. The quantized intraframe is reconstructed through a dequantization module 570 and an inverse transformation module 580.

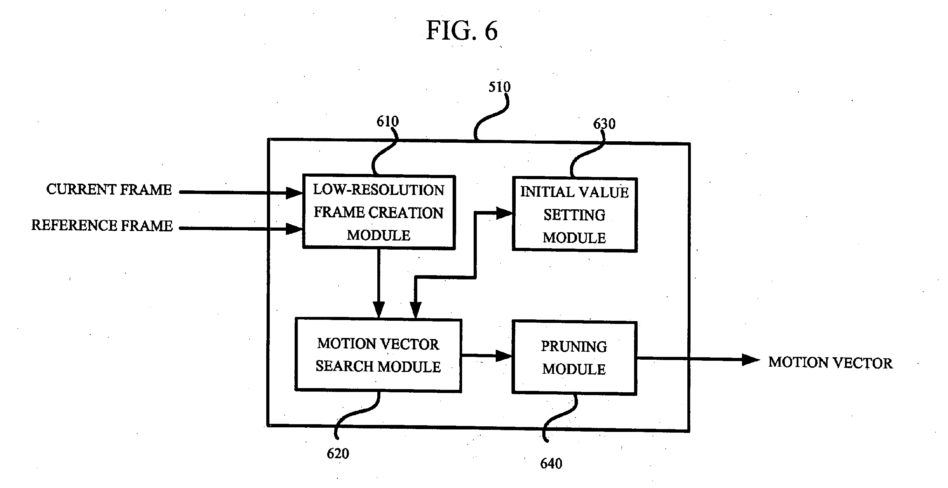

An interframe is motion-estimated through the motion estimation module 510. The motion estimation module 510 receives both a reference frame stored in a reference frame storing module 590 and the interframe and performs motion estimation in units of a variable-size block. The motion estimation module 510 will be described in greater detail with reference to FIG. 6. A motion compensation module 520 compensates for motion of the reference frame and reconstructs a reference frame to be compared with the interframe. The interframe is compared with the reference frame reconstructed in a comparison module 522 and becomes a residual frame. The transformation module 540 transforms the residual frame into a transformation algorithm to remove spatial redundancy. DCT or wavelet transformation may be used as the transformation algorithm. The quantization module 550 quantizes a transformed frame to reduce the amount of information. A quantized frame becomes a one-dimensional bitstream after being scanned and reordered and is then compressed through the entropy encoder 560. Thus, a final bitstream is created.

The quantized intraframe or interframe is reconstructed and is then used as a reference frame for other frames. The quantized intraframe is reconstructed through the dequantization module 570 and the inverse transformation module 580. The quantized interframe becomes a residual frame through the dequantization module 570 and the inverse transformation module 580, and the residual frame is added to a motion-compensated reference frame and an addition module 524 for reconstruction. The motion-compensated reference frame is obtained by performing motion-compensation on the reference frame stored in the reference frame storing module 590 by the motion compensation module 520, using a motion vector obtained during interframe coding. Reconstructed frames are stored in the reference frame storing module 590 and used for coding other interframes.

FIG. 6 is a block diagram of the motion estimation module 510 according to an exemplary embodiment of the present invention.

The motion estimation module 510 includes a low-resolution frame creation module 610, a motion vector search module 620, an initial value setting module 630, and a pruning module 640. The low-resolution frame creation module 610 creates low-resolution frames for a current frame and a reference frame. The motion vector search module 620 searches for motion vectors between the current frame and the reference frame. The initial value setting module 630 sets initial values used for motion searching. The pruning module 640 determines unit blocks of which motion is to be estimated through the pruning process.

The low-resolution frame creation module 610 obtains low-resolution frames by down-sampling the current frame and the reference frame. Each of the low-resolution frames may be at two or more resolution levels. Once the low-resolution frames are created, the motion vector search module 620 estimates a motion vector by comparing a frame in the top layer (having the lowest resolution) and the reference frame. The estimated motion vector is processed by the initial setting module 630 and is used for initial value setting as described above. The motion vector search module 620 performs motion searching in the lower layer using the set initial values. After completion of motion vector searching at the highest resolution (the original resolution), the pruning module 640 merges blocks to code a motion vector into the minimum amount of bits. A motion vector obtained for each of variable-size blocks is output to the motion compensation module 520 for use in motion estimation. Also, the motion vector is output to the entropy encoder 560 to be included in the final bitstream.

In the exemplary embodiments shown in FIGS. 5 and 6, the term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented such that they execute one or more computers in a communication system.

In concluding the detailed description, those skilled in the art will appreciate that many variations and modifications can be made to the exemplary embodiments without substantially departing from the principles of the present invention. Therefore, the disclosed exemplary embodiments of the invention are used in a generic and descriptive sense only and not for purposes of limitation.

According to embodiments of the present invention, the amount of computation required for motion estimation can be reduced by appropriately setting an initial value for a motion vector to be used in interframe coding.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method for motion estimation of a video frame, the method comprising:

    providing (S 110) a low-resolution frame by down-sampling a video frame that is to be motion estimated;
    estimating (S120) motion vectors for blocks of the low-resolution frame; and
    creating (S130) initial values used to estimate motion vectors for blocks of a high resolution frame by up-sampling the blocks of the low-resolution frame.

2. The method of claim 1, wherein in the creating of the initial values, up-sampling is performed using median filtering.

3. The method of claim 2, wherein in the creating of the initial values, when one initial value is created, three of the motion vectors estimated in the low-resolution frame are input to a median filter.

4. The method of any preceding claim, further comprising searching for motion vectors for high-resolution blocks using the initial values and creating initial values used to search for motion vectors for larger blocks having the same resolution by down-sampling blocks for which motion vectors are already searched into a predetermined number of blocks.

5. The method of claim 4, further comprising pruning (S 140) motion vectors to be used for interframe coding from among the motion vectors for the high-resolution blocks.

6. A recording medium having a computer readable program recorded therein, the program for executing a method for motion estimation of a video frame, the method comprising:

    providing a low-resolution frame by down-sampling a video frame that is to be motion estimated;
    estimating motion vectors for blocks of the low-resolution frame; and
    creating initial values used to estimate motion vectors for blocks of a high resolution frame by up-sampling the blocks of the low-resolution frame.

7. A video encoder comprising:

    a motion estimation module (510) operable to:

        provide a low-resolution frame by down-sampling a video frame to be motion estimated;

estimate motion vectors for blocks of the low-resolution frame;

create initial values used to estimate motion vectors for blocks of a high resolution frame by up-sampling the blocks of the low-resolution frame;

perform motion estimation for the high resolution frame using the initial values and

a comparison module (522) operable to create a residual frame with respect to the video frame by comparing the video frame with a reconstructed reference frame using the motion vectors estimated by the motion estimation module.

8. The video encoder of claim 7, wherein the motion estimation module (510) comprises:

a low-resolution frame creation module (610) operable to create a low-resolution frame for a video frame;

a motion vector search module (620) operable to search for motion vectors for blocks of video frames having different resolutions, the video frames being created by the low-resolution frame creation module; and

an initial value setting module (630) operable to set initial values to be used for motion vector searching for other blocks by filtering motion vectors found by the motion vector search module.

9. The video encoder of claim 8, wherein the motion estimation module (510) further comprises a pruning module (640) operable to prune motion vectors to be used for interframe coding of the video frame.

10. The video encoder of claim 8 or 9, wherein the initial value setting module (630) set is operable to the initial values using median filtering.

# FIG. 1

START

1. LOW-RESOLUTION
FRAME CREATION

LOW-RESOLUTION FRAME
CREATION (CURRENT FRAME
AND REFERENCE FRAME) — S110

2: MOTION SEARCHING
IN TOP LAYER

MOTION VECTOR
ESTIMATION — S120

BLOCK SPLITTING AND
MOTION VECTOR
SEARCHING — S122

3. MOTION SEARCHING
IN NEXT LAYER

S132 — REFINEMENT OF MOTION
VECTORS FOR ALL NODES

INITIAL VALUE SETTING — S130

S136 — BLOCK SPLITTING AND
MOTION VECTOR
SEARCHING

INITIAL VALUE SETTING — S134

4. PRUNING

PRUNING — S140

END

# FIG. 2

MOTION VECTOR FOR
ORIGINAL RESOLUTION

# FIG. 3

MOTION VECTOR FOR
ORIGINAL RESOLUTION

FIG. 4

410

| | 1 | 2 | |
|---|---|---|---|
| 3 | 4 | 5 | 6 |
| 7 | 8 | 9 | 10 |
| 11 | 12 | 13 | 14 |

UP-SAMPLING

430

e

420

| a | b |
|---|---|
| c | d |

DOWN-SAMPLING

EP 1 587 328 A2

# FIG. 5

EP 1 587 328 A2

# FIG. 6

CURRENT FRAME → LOW-RESOLUTION FRAME CREATION MODULE (610)

REFERENCE FRAME → LOW-RESOLUTION FRAME CREATION MODULE (610)

510

INITIAL VALUE SETTING MODULE (630)

MOTION VECTOR SEARCH MODULE (620)

PRUNING MODULE (640) → MOTION VECTOR

EP 1 587 328 A2